# EUROPÄISCHE PATENTSCHRIFT

(11) **EP 3 614 012 B1**
(45) Veröffentlichungstag und Bekanntmachung des Hinweises auf die Patenterteilung: **30.11.2022**
(21) Anmeldenummer: 19190735.1
(22) Anmeldetag: 08.08.2019
(51) Int. Cl.: F16F 9/30, F16F 15/02

(54) **SCHWINGPLATTENANORDNUNG ZUM VERBINDEN EINER MASCHINE MIT EINEM FUNDAMENT**
OSCILLATING PLATE ASSEMBLY FOR CONNECTING A MACHINE WITH A FOUNDATION
DISPOSITIF DE PLAQUE OSCILLANTE PERMETTANT DE RACCORDER UNE MACHINE À UNE FONDATION

(30) Priorität: 14.08.2018 PT 2018111111
(43) Veröffentlichungstag der Anmeldung: 26.02.2020
(73) Patentinhaber: Robert Bosch GmbH, 70442 Stuttgart (DE)
(72) Erfinder: Herbst, Juergen, 76437 Rastatt (DE); Attlid, Emil, 78321 Aneby (SE); Ferreira, Pedro, 2655-287 Ericeira (PT); Lima, Rafael, 3720-230 Oliveira de Azemeis (PT)

(56) Entgegenhaltungen:
- EP-A1- 1 887 124
- WO-A1-95/27975
- WO-A1-97/04193
- US-A- 2 660 387

## Beschreibung

### Stand der Technik

Es ist bereits eine Schwingplattenanordnung zum Verbinden einer Maschine mit einem Fundament bekannt. In der Regel umfasst eine solche Schwingplattenanordnung mindestens einen ersten Schwingungsdämpfer, eine Bodenplatte und mindestens einen zweiten Schwingungsdämpfer, wobei die Bodenplatte unter Zwischenlegung des ersten Schwingungsdämpfers mit dem Fundament verbunden ist, und wobei die Bodenplatte unter Zwischenlegung des zweiten Schwingungsdämpfers mit der Maschine verbunden ist.

Die EP 1 887 124 A1 offenbart einen bodenstabilisierenden Fuß für ein Haushaltsgerät mit einer Basis und einem Bolzen, wobei zwischen Basis und Bolzen zumindest eine dämpfende Folie aus viskoelastischem Material angeordnet ist.

Das Dokument US 2 660 387 A offenbart auch eine Schwingplattenanordnung zum Verbinden einer Maschine mit einem Fundament.

### Offenbarung der Erfindung

Die Erfindung geht aus von einer Schwingplattenanordnung zum Verbinden einer Maschine mit einem Fundament, umfassend mindestens einen ersten Schwingungsdämpfer, eine Bodenplattenanordnung und mindestens einen zweiten Schwingungsdämpfer, wobei die Bodenplattenanordnung unter Zwischenlegung des mindestens einen ersten Schwingungsdämpfers mit dem Fundament verbindbar ist, und wobei die Bodenplattenanordnung unter Zwischenlegung des mindestens einen zweiten Schwingungsdämpfers mit der Maschine verbindbar ist.

Die Bodenplattenanordnung umfasst eine erste Bodenplatte, mindestens eine Schwingungen dämpfende und/oder isolierende Zwischenplatte und mindestens eine weitere Bodenplatte.

Die erste Bodenplatte, die mindestens eine Zwischenplatte und/oder die mindestens eine weitere Bodenplatte weisen jeweils eine im Wesentlichen plattenartige Gestalt mit jeweils zwei, im Wesentlichen parallelen, Hauptflächen auf.

Es wird eine Schwingplattenanordnung vorgeschlagen, bei der die erste Bodenplatte mit mindestens einem, vorzugsweise drei, senkrecht auf einer zweiten Hauptfläche der ersten Bodenplatte stehenden Bolzen verbunden, insbesondere verschweißt, ist, und dass die erste Bodenplatte unter Zwischenlegung der mindestens einen Zwischenplatte, der mindestens einen weiteren Bodenplatte und des mindestens einen, vorzugsweise drei, zweiten Schwingungsdämpfers mittels des Bolzens mit einer Maschine verbindbar, insbesondere verschraubbar, ist. Damit ist eine Möglichkeit zur stabilen räumlichen Fixierung der Maschine an der Bodenplattenanordnung bei gleichzeitig guter Schwingungsdämpfung gegeben.

Das, insbesondere ruhende, Fundament ist eine tragende Struktur wie eine Betongründung, ein Maschinenfundament, ein fest stehendes Gestell oder ein fest stehendes Gehäuse und dient als Aufstellort beziehungsweise als Aufstellfläche der Maschine samt Schwingplattenanordnung. Die Maschine, beispielsweise eine Produktionsmaschine, eine Strömungsmaschine oder eine Verdrängermaschine, erfüllt im Betrieb einen von einem Nutzer gewünschten Zweck. Beim Betrieb der Maschine kann es aber auch zu unerwünschten mechanischen Schwingungen kommen, wie beispielsweise Vibrationen, Erschütterungen oder Stöße. Beispielsweise können Vibrationen von sich wiederholend bewegenden, insbesondere umlaufenden Maschinenteilen verursacht werden, Stöße können von einem Anfahrmoment der Maschine beim Starten eines Maschinenbetriebs verursacht werden. Beispiele für Schwingungen sind Torsionsschwingungen um eine Achse, transversale Schwingungen senkrecht zu einer Ebene, longitudinale Schwingungen in einer Ebene. Die Schwingplattenanordnung ist räumlich zwischen Fundament und Maschine anordenbar bzw. angeordnet. Die Schwingplattenanordnung dient der Dämpfung und Isolierung (Entkopplung) von Schwingungen sowie der Absorption von Schwingungsenergie gegenüber dem Fundament. Die Bewegung und die Energie der Schwingungen der Maschine erreichen so nicht oder zumindest verringert das Fundament. Dazu umfasst die Schwingplattenanordnung einen oder mehrere erste Schwingungsdämpfer zur schwingungsgedämpften und Schwingungsenergie absorbierenden Verbindung mit dem Fundament einerseits sowie einen oder mehrere zweite Schwingungsdämpfer zur schwingungsgedämpften und Schwingungsenergie absorbierenden Verbindung mit der Maschine andererseits. Die Schwingungsdämpfer können ein Elastomer, insbesondere Gummi, umfassen. Alternativ oder ergänzend können die Schwingungsdämpfer eine metallische Feder, beispielsweise eine Schraubenfeder, eine Tellerfeder oder eine Blattfeder, umfassen. Alternativ oder ergänzend können die Schwingungsdämpfer eine hydraulische oder pneumatische Feder umfassen. Die Schwingungsdämpfer dienen der Dämpfung der unerwünschten mechanischen Schwingungen. Zwischen den ersten Schwingungsdämpfern und den zweiten Schwingungsdämpfern, und mit diesen verbunden, ist die Bodenplattenanordnung angeordnet. Bei Verwendung der Schwingplattenanordnung ist zwischen der Bodenplattenanordnung und dem Fundament der mindestens eine erste Schwingungsdämpfer dazwischen gelegt, also angeordnet, insbesondere verbunden mit der Bodenplattenanordnung und/oder verbindbar mit dem Fundament. Zwischen der Bodenplattenanordnung und der Maschine ist der mindestens eine zweite Schwingungsdämpfer dazwischen gelegt, also angeordnet, insbesondere verbunden mit der Bodenplattenanordnung und/oder verbindbar mit der Maschine. Die Bodenplattenanordnung umfasst eine erste Bodenplatte, mindestens eine Zwischenplatte, und mindestens eine weitere Bodenplatte. Insbesondere ist die Bodenplattenanordnung nach dem Sandwich-Prinzip aufgebaut und umfasst in räumlicher Abfolge die erste Bodenplatte, die Zwischenplatte, die weitere Bodenplatte. Alternativ umfasst die Bodenplattenanordnung in räumlicher Abfolge die erste Bodenplatte, eine erste Zwischenplatte, eine erste weitere Bodenplatte, eine zweite Zwischenplatte, eine zweite weitere Bodenplatte. Die Zwischenplatte dämpft und/oder isoliert Schwingungen der weiteren Bodenplatte gegenüber der ersten Bodenplatte und absorbiert die Schwingungsenergie. Die Bewegung und die Energie der Schwingungen der weiteren Bodenplatte erreichen so nicht oder zumindest verringert die erste Bodenplatte.

Unter einer plattenartigen Gestalt wird hier eine flache, ebene Geometrie eines Körpers (insbesondere der ersten Bodenplatte, der Zwischenplatte, der weiteren Bodenplatte) verstanden, dessen Dicke klein ist gegenüber seiner Breite und Länge bzw. gegenüber seinem Durchmesser. Die Breite und Länge bzw. der Durchmesser charakterisieren die beiden zueinander parallelen Hauptflächen eines Körpers, die eckig oder rund sein können. Eine erste Bodenplatte, eine Zwischenplatte und/oder eine weitere Bodenplatte von plattenartiger Gestalt lassen sich, beispielsweise aus plattenförmigem Halbzeug, besonders kostengünstig herstellen.

Die Hauptflächen der Körper können gleich groß sein. Sie können auch verschieden groß sein.

Dadurch, dass die erste Bodenplatte mit mindestens einem, vorzugsweise drei, senkrecht auf der zweiten Hauptfläche der ersten Bodenplatte stehenden Bolzen verbunden, insbesondere verschweißt, ist, und dass die erste Bodenplatte unter Zwischenlegung der mindestens einen Zwischenplatte, der mindestens einen weiteren Bodenplatte und des mindestens einen, vorzugsweise drei, zweiten Schwingungsdämpfers mittels des Bolzens mit einer Maschine verbindbar, insbesondere verschraubbar, ist, ist eine Möglichkeit zur stabilen räumlichen Fixierung der Maschine an der Bodenplattenanordnung bei gleichzeitig guter Schwingungsdämpfung gegeben.

Ein vorteilhaftes Ausführungsbeispiel der Schwingplattenanordnung ist dadurch gekennzeichnet, dass die mindestens eine Zwischenplatte elastische oder viskoelastische Eigenschaften aufweist, vorzugsweise ein elastisches oder viskoelastisches Material, insbesondere mindestens einen Werkstoff aus den Werkstoffgruppen Bitumen, Elastomere, Silikone, umfasst. Diese Eigenschaften und Materialien sind bei günstigen Material- und Herstellkosten besonders gut geeignet zur Schwingungsdämpfung und Schwingungsenergieabsorption. Es hat sich gezeigt, dass eine elastische oder viskoelastische Zwischenplatte eine besonders gute Schwingungsdämpfung gewährleistet.

Ein weiteres vorteilhaftes Ausführungsbeispiel der Schwingplattenanordnung ist dadurch gekennzeichnet, dass die erste Bodenplatte und/oder die mindestens eine weitere Bodenplatte mindestens ein Metall umfassen, vorzugsweise aus einem Metall, insbesondere aus Eisen oder Stahl, gebildet sind. Diese Eigenschaften und Materialien sind bei günstigen Material- und Herstellkosten und aufgrund von Festigkeit und Dichte besonders gut geeignet zur Schwingungsdämpfung und Schwingungstilgung.

Ein weiteres vorteilhaftes Ausführungsbeispiel der Schwingplattenanordnung ist dadurch gekennzeichnet, dass die erste Bodenplatte, die mindestens eine Zwischenplatte und/oder die mindestens eine weitere Bodenplatte jeweils eine von einer plattenartigen Gestalt abweichende Gestalt aufweisen. Beispielsweise kann eine plattenartige Gestalt an den Kanten umgeformt, insbesondere einfach oder doppelt abgewinkelt, sein. Eine andere Gestalt kann tiefgezogen sein. Noch eine andere Gestalt kann Rippen zur mechanischen Verstärkung aufweisen.

Ein weiteres vorteilhaftes Ausführungsbeispiel der Schwingplattenanordnung ist dadurch gekennzeichnet, dass die Schwingplattenanordnung ausgebildet ist, auf sie einwirkende Torsionsschwingungen, insbesondere um eine zu den Hauptflächen senkrechte Längsachse, sowie Transversalschwingungen, insbesondere senkrecht zu den Hauptflächen, und Longitudinalschwingungen, insbesondere in der Ebene der Hauptflächen, zu dämpfen.

Ein weiteres vorteilhaftes Ausführungsbeispiel der Schwingplattenanordnung ist dadurch gekennzeichnet, dass die Bodenplattenanordnung ausgebildet ist, auf sie einwirkende Torsionsschwingungen, insbesondere um eine zu den Hauptflächen senkrechte Längsachse, sowie Transversalschwingungen, insbesondere senkrecht zu den Hauptflächen, zu dämpfen. Damit weist die Bodenplattenanordnung insbesondere gute Eigenschaften zur Dämpfung von Drehungen und Biegungen auf. Eingestellt werden diese Eigenschaften durch die gewählten geometrischen Abmessungen und das gewählte Material, insbesondere der Zwischenplatte.

Ein weiteres vorteilhaftes Ausführungsbeispiel der Schwingplattenanordnung ist dadurch gekennzeichnet, dass die Zwischenplatte mit ihrer ersten Hauptfläche mit einer zweiten Hauptfläche der ersten Bodenplatte flächig verbunden, insbesondere verklebt, ist, und/oder dass die Zwischenplatte mit ihrer zweiten Hauptfläche mit einer ersten Hauptfläche der weiteren Bodenplatte flächig verbunden, insbesondere verklebt, ist. Dadurch ergeben sich große Berührungs- und Verbindungsflächen zwischen den benachbarten Körpern Zwischenplatte / erste Bodenplatte und Zwischenplatte / weitere Bodenplatte zur effektiven Schwingungsdämpfung. Die erste Bodenplatte, die Zwischenplatte und/oder die weitere Bodenplatte können miteinander verklebt sein und Kräfte durch Stoffschluss übertragen. Die erste Bodenplatte, die Zwischenplatte und/oder die weitere Bodenplatte können alternativ oder ergänzend auch aufeinander gepresst sein und Kräfte durch Kraftschluss übertragen.

Ein weiteres vorteilhaftes Ausführungsbeispiel der Schwingplattenanordnung ist dadurch gekennzeichnet, dass zumindest die Hauptflächen der Zwischenplatte (insbesondere deren zweite Hauptfläche) und die Hauptflächen der weiteren Bodenplatte (insbesondere deren erste Hauptfläche) im Wesentlichen gleiche Abmessungen aufweisen. Gegenüber der ersten Bodenplatte, von der angenommen werden kann, dass sie größer als die Zwischenplatte und die weiter Bodenplatte ist, geht damit einher eine relativ kleinere Schwingungsbewegung der weiteren Bodenplatte, insbesondere in der Ebene der Hauptflächen, aber auch senkrecht zu den Hauptflächen.

Ein alternatives vorteilhaftes Ausführungsbeispiel der Schwingplattenanordnung ist dadurch gekennzeichnet, dass die Hauptflächen der Zwischenplatte (insbesondere deren zweite Hauptfläche) kleinere Abmessungen als die Hauptflächen der weiteren Bodenplatte (insbesondere deren erste Hauptfläche) aufweisen. Gegenüber der ersten Bodenplatte, von der angenommen werden kann, dass sie größer als die Zwischenplatte und die weiter Bodenplatte ist, geht damit einher eine relativ größere Schwingungsbewegung der weiteren Bodenplatte, insbesondere in der Ebene der Hauptflächen, aber auch senkrecht zu den Hauptflächen.

Ein weiteres vorteilhaftes Ausführungsbeispiel der Schwingplattenanordnung ist dadurch gekennzeichnet, dass die Hauptflächen der ersten Bodenplatte, der mindestens einen Zwischenplatte und/oder der mindestens einen weiteren Bodenplatte im Wesentlichen parallel zu einer ersten Anschlussebene zum Verbinden der Schwingplattenanordnung mit dem Fundament und/oder parallel zu einer zweiten Anschlussebene zum Verbinden der Schwingplattenanordnung mit der Maschine angeordnet sind, wobei die Anschlussebenen von dem mindestens einen ersten Schwingungsdämpfer und/oder von dem mindestens einen zweiten Schwingungsdämpfer gebildet wird. Die erste Anschlussebene wird insbesondere von Enden der ersten Schwingungsdämpfer gebildet, die auf einer der ersten Bodenplatte abgewandten Seite der ersten Schwingungsdämpfer liegen. Die zweite Anschlussebene wird insbesondere von Enden der zweiten Schwingungsdämpfer gebildet, die auf einer der weiteren Bodenplatte abgewandten Seite der zweiten Schwingungsdämpfer liegen. Durch die parallele Anordnung ergeben sich gute Dämpfungseigenschaften, eine hohe Gleichteileverwendung und eine leichte Auslegung der Schwingungsdämpfer.

Ein weiteres vorteilhaftes Ausführungsbeispiel der Schwingplattenanordnung ist dadurch gekennzeichnet, dass die erste Bodenplatte mit vier im Randbereich der ersten Hauptfläche der ersten Bodenplatte angeordneten ersten Schwingungsdämpfern verbunden ist. Damit ist eine Möglichkeit zur stabilen, insbesondere kippstabilen, räumlichen Fixierung der Bodenplattenanordnung am Fundament bei gleichzeitig guter Schwingungsdämpfung gegeben.

Ein weiteres vorteilhaftes Ausführungsbeispiel der Schwingplattenanordnung ist dadurch gekennzeichnet, dass die erste Bodenplatte im Bereich zweier einander gegenüberliegender Kanten stufenartig ausgebildet ist und in jedem Bereich einen im Wesentlichen senkrecht zu den Hauptflächen der ersten Bodenplatte abgewinkelten ersten Stufenabschnitt mit einer Höhe H und einen im Wesentlichen parallel zu den Hauptflächen der ersten Bodenplatte verlaufenden, vom ersten Stufenabschnitt, insbesondere nach außen, abgewinkelten zweiten Stufenabschnitt aufweist. Dabei ist der zweite Stufenabschnitt mit dem mindestens einen ersten Schwingungsdämpfer verbunden. Durch den stufenartigen Versatz der Höhe H zwischen Hauptfläche und zweitem Stufenabschnitt kann auch bei höheren oder größeren ersten Schwingungsdämpfern eine besonders niedrige, also platzsparende Bauhöhe der Schwingplattenanordnung erreicht werden. Außerdem versteifen die Stufenabschnitte die erste Bodenplatte.

Ein weiteres vorteilhaftes Ausführungsbeispiel der Schwingplattenanordnung ist dadurch gekennzeichnet, dass die erste Bodenplatte im Bereich zweier einander gegenüberliegender Kanten, die nicht in den stufenartig ausgebildeten Bereichen liegen, vorzugsweise im Wesentlichen senkrecht zu den Hauptflächen abgewinkelte Abschnitte aufweist. Diese Abschnitte können beispielsweise den Richtungen der ersten Stufenabschnitte entgegengerichtet sein. Die Abschnitte versteifen die erste Bodenplatte.

Es wird eine Maschinenanordnung zum Verbinden einer Maschine mit einem Fundament vorgeschlagen, umfassend eine Maschine und eine Schwingplattenanordnung, wobei die Maschine mit der Schwingplattenanordnung verbunden ist, und wobei die Schwingplattenanordnung mit dem Fundament verbindbar ist. Diese Maschinenanordnung ist dadurch gekennzeichnet, dass die Schwingplattenanordnung nach einer der vorstehenden Ausführungen ausgebildet ist. Damit ist eine Maschinenanordnung gegeben, die unerwünschte Schwingungen der Maschine gut gedämpft in die Schwingplattenanordnung und das Fundament einleitet.

Es wird eine Kompressoranordnung zum Verbinden eines Kompressors, insbesondere eines Kompressors zum Antreiben einer Wärmepumpe oder eines Kälteaggregats, mit einem Kompressorgehäuse vorgeschlagen, umfassend einen Kompressor, eine Schwingplattenanordnung und ein Kompressorgehäuse, wobei der Kompressor mit der Schwingplattenanordnung verbunden ist, und wobei die Schwingplattenanordnung mit dem Kompressorgehäuse verbunden ist. Die Kompressoranordnung ist dadurch gekennzeichnet, dass die Schwingplattenanordnung nach einer der vorstehenden Ausführungen ausgebildet ist. Der Kompressor ist eine spezielle Ausführung der Maschine. Das Kompressorgehäuse ist eine spezielle Ausführung des Fundaments für den Kompressor. Anstelle eines Kompressorgehäuses kann auch ein Wärmepumpengehäuse, ein Kälteaggregatgehäuse oder ein Gestell Verwendung als Fundament finden. Damit ist eine Kompressoranordnung gegeben, die unerwünschte Schwingungen des Kompressors gut gedämpft in die Schwingplattenanordnung und das Kompressorgehäuse einleitet.

Die Zeichnung zeigt in einer Figur ein schematisches Ausführungsbeispiel der Erfindung. Es zeigt
- Figur 1: eine Schwingplattenanordnung in Explosionsdarstellung,
- Figur 2: eine montierte Schwingplattenanordnung,
- Figur 3: eine Kompressoranordnung in Explosionsdarstellung,
- Figur 4: eine montierte Kompressoranordnung.

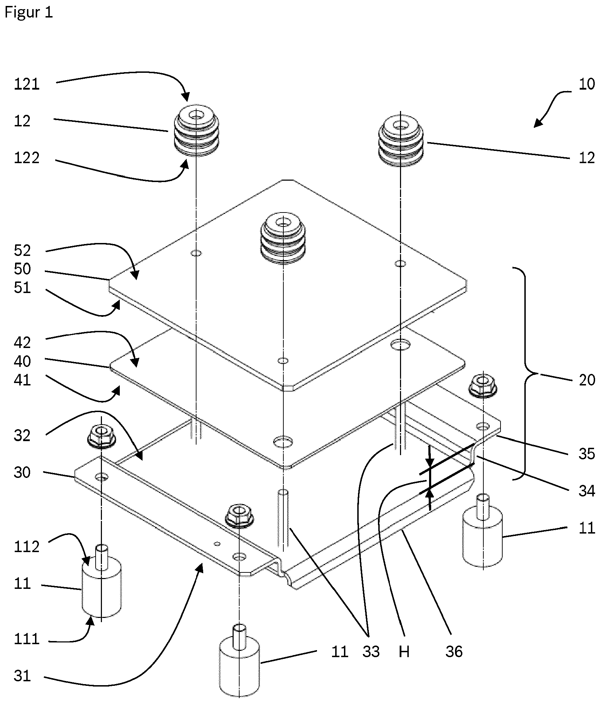

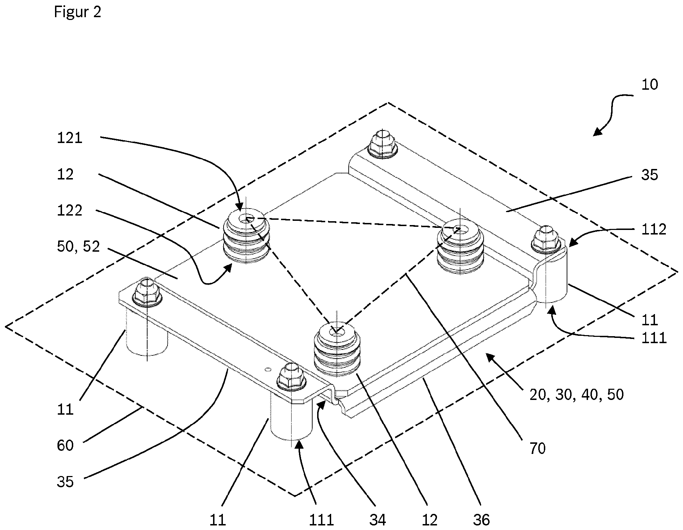

Aus Figur 1 geht eine Schwingplattenanordnung 10 zum Verbinden einer Maschine (nicht dargestellt) mit einem Fundament (nicht dargestellt) in Explosionsdarstellung hervor. Aus Figur 2 geht die montierte Schwingplattenanordnung nach Figur 1 hervor. Die Schwingplattenanordnung 10 umfasst vier erste Schwingungsdämpfer 11 (drei sichtbar, einer unsichtbar hinter der ersten Bodenplatte), eine Bodenplattenanordnung 20 und drei zweite Schwingungsdämpfer 12. Die Bodenplattenanordnung 20 umfasst eine erste Bodenplatte 30, eine Zwischenplatte 40 und eine weitere Bodenplatte 50. In Figur 2 verbirgt sich die Zwischenplatte 40 zwischen der ersten Bodenplatte 30 und der weiteren Bodenplatte 50 und ist aufgrund der gewählten Perspektive nicht sichtbar. Die Bodenplattenanordnung 20 ist unter Zwischenlegung der vier ersten Schwingungsdämpfer 11 mit dem Fundament verbindbar. Angedeutet ist die erste Anschlussebene 60 erkennbar, an der die ersten Schwingungsdämpfer 11 und das Fundament sich berühren und miteinander verbunden, insbesondere verschraubt, sind. Die Bodenplattenanordnung 20 ist unter Zwischenlegung der drei zweiten Schwingungsdämpfer 12 mit der Maschine verbindbar. Die Zwischenplatte 40 ist ausgebildet, Schwingungen zu dämpfen und/oder zu isolieren. Vorzugsweise weist die Zwischenplatte 40 elastische oder viskoelastische Eigenschaften auf, beispielsweise ist sie aus einem elastischen oder viskoelastischen Material, insbesondere aus Bitumen gebildet. Die erste Bodenplatte 30 und/oder die weitere Bodenplatte 50 sind ausgebildet, Schwingungen abzuleiten und zu tilgen. Vorzugsweise weisen die erste Bodenplatte 30 und/oder die weitere Bodenplatte 50 steife und/oder schwere Eigenschaften auf, beispielsweise sind sie aus einem steifen und/oder schweren Material, insbesondere aus einem Metall, insbesondere aus Eisen oder Stahl, gebildet. Die erste Bodenplatte 30, die Zwischenplatte 40 und die weitere Bodenplatte 50 weisen jeweils eine plattenartige Gestalt mit jeweils zwei parallelen Hauptflächen (31, 32, 41, 42, 51, 52) auf. Die Hauptflächen der ersten Bodenplatte 30, der Zwischenplatte 40 und der weiteren Bodenplatte 50 weisen vorliegend jeweils eine im Wesentlichen rechteckige Form auf. Alternativ können die Hauptflächen der ersten Bodenplatte 30, der Zwischenplatte 40 und/oder der weiteren Bodenplatte 50 auch eine von der rechteckigen Form abweichende Form, beispielsweise eine dreieckige, eine sechseckige oder eine runde Form, aufweisen.

Durch die Kombination der räumlichen Aufeinanderfolge von ersten Schwingungsdämpfern 11, erster Bodenplatte 30, Zwischenplatte 40, weiterer Bodenplatte 50 und zweiten Schwingungsdämpfern 12 mit ihren spezifischen Einzeleigenschaften ist die Schwingplattenanordnung 10 besonders geeignet, auf sie einwirkende Torsionsschwingungen um eine zu den Hauptflächen senkrechte Längsachse, Transversalschwingungen senkrecht zu den Hauptflächen, sowie Longitudinalschwingungen in der Ebene der Hauptflächen zu dämpfen und zu isolieren.

Insbesondere können Schwingungen kleiner Amplituden und höherer Frequenz die Bodenplattenanordnung 20 nicht durchdringen, sondern werden zumindest teilweise an der ersten Bodenplatte 30 und der weiteren Bodenplatte 50 reflektiert, zumindest teilweise in der Zwischenplatte 40 gedämpft und isoliert, und zumindest teilweise von der Gesamtheit der Bodenplattenanordnung 20 getilgt. Unter anderem wird auch die Tilgung durch die ersten Schwingungsdämpfer 11 und zweiten Schwingungsdämpfer 12 unterstützt.

Die Zwischenplatte 40 ist mit ihrer ersten Hauptfläche 41 mit der zweiten Hauptfläche 32 der ersten Bodenplatte 30 flächig verbunden, insbesondere verklebt. Weiter ist die Zwischenplatte 40 mit ihrer zweiten Hauptfläche 42 mit der ersten Hauptfläche 51 der weiteren Bodenplatte 50 flächig verbunden, insbesondere verklebt. Insbesondere sind die erste Bodenplatte 30 und die weitere Bodenplatte 50 mittels der Zwischenplatte 40 voneinander getrennt und weisen keine starre Verbindung, beispielsweise Metall auf Metall, auf. Die flächigen Verbindungen bewirken eine wirksame Schwingungsdämpfung über die gesamte Zwischenplatte 40, ohne dass einzelne Bereiche mehr oder weniger beansprucht würden. Verklebungen sind besonders gut geeignet, um eine flächige Verbindung herzustellen.

Die Hauptflächen der ersten Bodenplatte 30, der Zwischenplatte 40 und der weiteren Bodenplatte 50 weisen im Wesentlichen gleiche Abmessungen auf. So sind bei einem gegebenen Bauraum der Bodenplattenanordnung 20 größtmögliche Verbindungsflächen zwischen den Platten und rein abmessungsbezogen eine größtmögliche Schwingungsdämpfung gegeben.

Die Hauptflächen der ersten Bodenplatte 30, der Zwischenplatte 40 und der weiteren Bodenplatte 50 sind parallel zur ersten Anschlussebene 60 zum Verbinden der Schwingplattenanordnung 10 mit dem Fundament angeordnet.

Die Hauptflächen der ersten Bodenplatte, der Zwischenplatte und der weiteren Bodenplatte sind parallel zu einer zweiten Anschlussebene 70 zum Verbinden der Schwingplattenanordnung 10 mit der Maschine angeordnet. Dabei ist die zweite Anschlussebene 70 von den drei zweiten Schwingungsdämpfern 12 gebildet. Die zweite Anschlussebene 70 wird insbesondere von Enden 121 der zweiten Schwingungsdämpfer 12 gebildet, die auf einer der weiteren Bodenplatte 50 abgewandten Seite der zweiten Schwingungsdämpfer 12 liegen. Insbesondere weisen die zweiten Schwingungsdämpfer 12 Anschlusspunkte oder Anschlussflächen 121 zur Verbindung mit und Abstützung auf der Maschine auf, diese Anschlusspunkte oder Anschlussflächen 121 definieren die zweite Anschlussebene 70. Durch die parallele Anordnung ergeben sich gute Dämpfungseigenschaften, eine höhere Gleichteileverwendung und eine leichte Auslegung bei den Schwingungsdämpfern 11, 12.

Die erste Bodenplatte 30 ist mit drei senkrecht auf der zweiten Hauptfläche 32 der ersten Bodenplatte 30 stehenden Bolzen 33 verbunden, vorzugsweise verschweißt. Unter Zwischenlegung der Zwischenplatte 40, der weiteren Bodenplatte 50 und der drei zweiten Schwingungsdämpfer 12 ist die erste Bodenplatte 30 mittels der Bolzen 33 mit der Maschine verbindbar, insbesondere verschraubbar. Die Maschine stützt sich mittels der drei zweiten Schwingungsdämpfer 12 schwingungsgedämpft an der weiteren Bodenplatte 50 ab. Die weitere Bodenplatte 50 stützt sich mittels der Zwischenplatte 40 schwingungsgedämpft an der ersten Bodenplatte 30 ab. So ist eine schwingungsdämpfende und gleichzeitig hinreichend fixierende Verbindungsmöglichkeit der Maschine mit der Bodenplattenanordnung 20 gegeben.

Die erste Bodenplatte 30 ist mit vier im Randbereich der ersten Hauptfläche 31 der ersten Bodenplatte 30 angeordneten ersten Schwingungsdämpfern 11 verbunden. Die ersten Schwingungsdämpfer 11 sind also auf der der Maschine abgewandten Seite 31 der ersten Bodenplatte 30 angeordnet. So ergibt sich eine schwingungsdämpfende und gleichzeitig hinreichend fixierende Verbindungsmöglichkeit der Bodenplattenanordnung 20 mit dem Fundament.

Die gedämpfte Schwingung, die über die drei zweiten Schwingungsdämpfer 12 in die weitere Bodenplatte 50 eingeleitet wird, erzeugt aufgrund der drei Anschlusspunkte 122 charakteristische Schwingungsmoden in der weiteren Bodenplatte 50. Die durch die Zwischenplatte 40 weiter gedämpfte Schwingung der ersten Bodenplatte 30 weist aufgrund der vier Anschlusspunkte 112 der vier ersten Schwingungsdämpfer 11 zum Fundament gänzlich andere Schwingungsmoden auf. Diese unterschiedlichen Schwingungsmoden löschen sich in der Bodenplattenanordnung 20, insbesondere in der Zwischenplatte 40, zumindest teilweise gegenseitig aus.

In Summe ergibt sich mit der Schwingplattenanordnung 10 eine schwingungsdämpfende und gleichzeitig hinreichend fixierende Verbindungsmöglichkeit der Maschine mit dem Fundament. Insbesondere der Sandwichaufbau der Bodenplattenanordnung 20 mit erster Bodenplatte 30, Zwischenplatte 40 und weiterer Bodenplatte 50 ist durch die Kombination ihrer Einzeleigenschaften Festigkeit und Masse sowie Elastizität bzw. Viskoelastizität zusammen mit der jeweiligen, voneinander abweichenden Anzahl der Anschlusspunkte 112, 122 besonders schwingungsdämpfend in einem Schwingungsbereich, der die Dämpfungseigenschaften der ersten Schwingungsdämpfer 11 und zweiten Schwingungsdämpfer 12 wirkungsvoll ergänzt.

Die erste Bodenplatte 30 ist an den Kanten umgeformt, insbesondere einfach oder doppelt abgewinkelt. Insbesondere ist die erste Bodenplatte 30 im Bereich zweier einander gegenüberliegender Kanten doppelt abgewinkelt und stufenartig ausgebildet. In jedem dieser stufenartigen Bereiche weist die erste Bodenplatte 30 einen im Wesentlichen senkrecht zu den Hauptflächen 31, 32 abgewinkelten ersten Stufenabschnitt 34 mit einer Höhe H auf, sowie einen im Wesentlichen parallel zu den Hauptflächen 31, 32 verlaufenden, vom ersten Stufenabschnitt 34 abgewinkelten zweiten Stufenabschnitt 35. Die beiden zweiten Stufenabschnitte 35 sind mit jeweils zwei der insgesamt vier ersten Schwingungsdämpfer 11 verbunden. Wie zu erkennen ist, kann dadurch die Bauhöhe der Bodenplattenanordnung 20 über dem Fundament trotz der Bauhöhe der Schwingungsdämpfer 11 deutlich verringert werden. Dies hat besondere Vorteile in engen Aufstellsituationen. Insbesondere wird die Bauhöhe der Bodenplattenanordnung 20 um das Maß H verringert.

Die erste Bodenplatte 30 ist im Bereich zweier einander gegenüberliegender Kanten, die nicht die stufenartig ausgebildeten Bereiche sind, vorzugsweise im Wesentlichen senkrecht zu den Hauptflächen, abschnittsweise abgewinkelt. Diese abgewinkelten Abschnitte 36 können beispielsweise den ersten Stufenabschnitten 34 entgegengerichtet sein. Die Stufenabschnitte 34, 35 und die Abschnitte 36 versteifen die erste Bodenplatte.

Die Geometrie der ersten Bodenplatte 30 ist relativ aufwändig, sie kann leichter beispielsweise aus einem eher dünneren Material wie ein dünneres Blech gebildet. Dagegen ist die Geometrie der weiteren Bodenplatte 50 sehr einfach, sie kann leicht auch aus einem dickeren Material wie ein dickeres Blech gebildet werden. Eine die Dämpfungs- und Tilgungseigenschaften der Bodenplattenanordnung 20 beeinflussende Gesamtmasse von erster Bodenplatte 30, Zwischenplatte 40 und weiterer Bodenplatte 50 kann so vorteilhafterweise unabhängig von der Geometrie der ersten Bodenplatte 30 mittels einer Dicke der weiteren Bodenplatte 50 eingestellt werden.

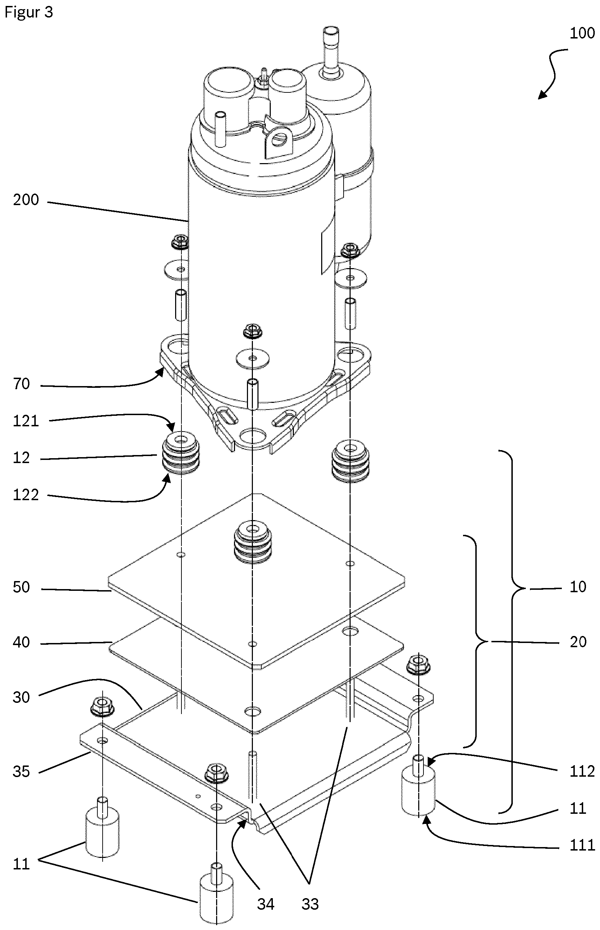

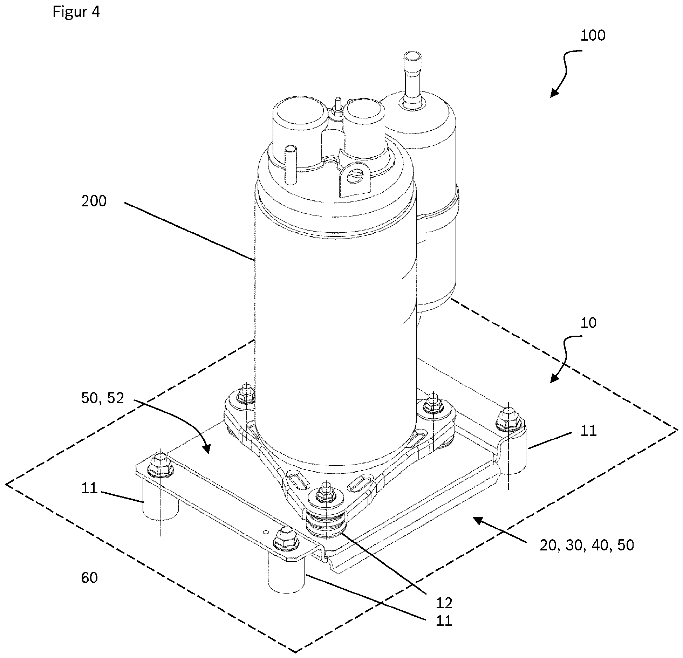

Aus Figur 3 geht eine Kompressoranordnung 100 in Explosionsdarstellung hervor, Figur 4 zeigt dieselbe Kompressoranordnung 100 in montiertem Zustand. Die Kompressoranordnung 100 dient dem Verbinden eines Kompressors 200, insbesondere eines Kompressors 200 zum Antreiben einer Wärmepumpe oder eines Kälteaggregats, mit einem Kompressorgehäuse, von dem hier nur die Anschlussebene 60 dargestellt ist. Die Kompressoranordnung 100 umfasst einen Kompressor 200, eine Schwingplattenanordnung 10 und ein Kompressorgehäuse (Anschlussebene 60), wobei der Kompressor 200 mit der Schwingplattenanordnung 10 verbunden ist, und wobei die Schwingplattenanordnung 10 mit dem Kompressorgehäuse (Anschlussebene 60) verbunden ist. Die Schwingplattenanordnung 10 kann wie vorstehend beschrieben ausgebildet sein. Die Schwingplattenanordnung 10 umfasst vier erste Schwingungsdämpfer 11, eine Bodenplattenanordnung 20 und drei zweite Schwingungsdämpfer 12. Die Bodenplattenanordnung 20 umfasst eine erste Bodenplatte 30, eine Schwingungen dämpfende und/oder isolierende Zwischenplatte 40 und eine weitere Bodenplatte 50.

Zu erkennen sind die erste Anschlussebene 60 und die zweite Anschlussebene 70, gebildet von Anschlusspunkten oder Anschlussflächen der Schwingungsdämpfer 11, 12, zur Verbindung mit und Abstützung auf dem Kompressorgehäuse (Anschlussebene 60) einerseits bzw. dem Kompressor 200 andererseits.

Die Schwingplattenanordnung 10 ist besonders gut geeignet, einen Kompressor 200 schwingungsgedämpft und zumindest teilweise schwingungsisolierend in einem Gehäuse (Anschlussebene 60) oder Gestell des Kompressors 200 oder der Wärmepumpe oder des Kälteaggregats aufzustellen. Unerwünschte Schwingungen des Kompressors 200 wie Vibrationen, Erschütterungen oder Stöße verschiedenster Ausprägungen und Moden werden effektiv gedämpft und isoliert. So werden potentiell bauteilbeeinflussende, insbesondere bauteilzerstörende, aber auch fühlbare und hörbare Schwingungen von dem Gehäuse (Anschlussebene 60) oder Gestell sowie eventuell weiteren darin angeordneten Komponenten ferngehalten. Infolge ergibt sich ein leiser, ruhiger, stabiler und sicherer Kompressorbetrieb, der hinsichtlich eines langen Produktlebens als auch hinsichtlich des akustischen und/oder haptischen bzw. taktilen Komforts und der Gesundheit eines Nutzers beste Bedingungen schafft.

## Patentansprüche

1. Schwingplattenanordnung (10) zum Verbinden einer Maschine mit einem Fundament, umfassend mindestens einen ersten Schwingungsdämpfer (11), eine Bodenplattenanordnung (20) und mindestens einen zweiten Schwingungsdämpfer (12),
wobei die Bodenplattenanordnung (20) unter Zwischenlegung des mindestens einen ersten Schwingungsdämpfers (11) mit dem Fundament verbindbar ist, und
wobei die Bodenplattenanordnung (20) unter Zwischenlegung des mindestens einen zweiten Schwingungsdämpfers (12) mit der Maschine verbindbar ist,
wobei die Bodenplattenanordnung (20) eine erste Bodenplatte (30), mindestens eine Schwingungen dämpfende und/oder isolierende Zwischenplatte (40) und mindestens eine weitere Bodenplatte (50) umfasst. wobei die erste Bodenplatte (30), die mindestens eine Zwischenplatte (40) und/oder die mindestens eine weitere Bodenplatte (50) jeweils eine im Wesentlichen plattenartige Gestalt mit jeweils zwei, im Wesentlichen parallelen, Hauptflächen aufweisen.
**dadurch gekennzeichnet, dass** die erste Bodenplatte (30) mit mindestens einem, vorzugsweise drei, senkrecht auf einer zweiten Hauptfläche (32) der ersten Bodenplatte (30) stehenden Bolzen (33) verbunden, insbesondere verschweißt, ist, und
dass die erste Bodenplatte (30) unter Zwischenlegung der mindestens einen Zwischenplatte (40), der mindestens einen weiteren Bodenplatte (50) und des mindestens einen, vorzugsweise drei, zweiten Schwingungsdämpfers (12) mittels des Bolzens (33) mit der Maschine verbindbar, insbesondere verschraubbar, ist.

2. Schwingplattenanordnung (10) nach Anspruch 1,
**dadurch gekennzeichnet, dass** die mindestens eine Zwischenplatte (40) elastische oder viskoelastische Eigenschaften aufweist, vorzugsweise ein elastisches oder viskoelastisches Material, insbesondere mindestens einen Werkstoff aus den Werkstoffgruppen Bitumen, Elastomere, Silikone, umfasst.

3. Schwingplattenanordnung (10) nach Anspruch 1 oder 2,
**dadurch gekennzeichnet, dass** die erste Bodenplatte (30) und/oder die mindestens eine weitere Bodenplatte (50) mindestens ein Metall umfassen, vorzugsweise aus einem Metall, insbesondere aus Eisen oder Stahl, gebildet sind.

4. Schwingplattenanordnung (10) nach einem der vorhergehenden Ansprüche, **dadurch gekennzeichnet, dass** die Bodenplattenanordnung (20) ausgebildet ist, auf sie einwirkende Torsionsschwingungen und Transversalschwingungen zu dämpfen.

5. Schwingplattenanordnung (10) nach einem der vorhergehenden Ansprüche, **dadurch gekennzeichnet, dass** die Zwischenplatte (40) mit ihrer ersten Hauptfläche (41) mit der zweiten Hauptfläche (32) der ersten Bodenplatte (30) flächig verbunden, insbesondere verklebt, ist, und/oder dass die Zwischenplatte (40) mit ihrer zweiten Hauptfläche (42) mit einer ersten Hauptfläche (51) der weiteren Bodenplatte (50) flächig verbunden, insbesondere verklebt, ist.

6. Schwingplattenanordnung (10) nach einem der vorhergehenden Ansprüche, **dadurch gekennzeichnet, dass** zumindest die Hauptflächen (41, 42) der Zwischenplatte (40) und die Hauptflächen (51, 52) der weiteren Bodenplatte (50) im Wesentlichen gleiche Abmessungen aufweisen.

7. Schwingplattenanordnung (10) nach einem der vorhergehenden Ansprüche, **dadurch gekennzeichnet, dass** die Hauptflächen der ersten Bodenplatte (30), der mindestens einen Zwischenplatte (40) und/oder der mindestens einen weiteren Bodenplatte (50) im Wesentlichen parallel zu einer ersten Anschlussebene (60) zum Verbinden der Schwingplattenanordnung (10) mit dem Fundament und/oder parallel zu einer zweiten Anschlussebene (70) zum Verbinden der Schwingplattenanordnung (10) mit der Maschine angeordnet sind, wobei die Anschlussebenen (60, 70) von dem mindestens einen ersten Schwingungsdämpfer (11) und/oder von dem mindestens einen zweiten Schwingungsdämpfer (12) gebildet werden.

8. Schwingplattenanordnung (10) nach einem der vorhergehenden Ansprüche, **dadurch gekennzeichnet, dass** die erste Bodenplatte (30) mit vier im Randbereich der ersten Hauptfläche (31) der ersten Bodenplatte (30) angeordneten ersten Schwingungsdämpfern (11) verbunden ist.

9. Schwingplattenanordnung (10) nach einem der vorhergehenden Ansprüche, **dadurch gekennzeichnet, dass** die erste Bodenplatte (30) im Bereich zweier einander gegenüberliegender Kanten stufenartig ausgebildet ist und in jedem Bereich einen im Wesentlichen senkrecht zu den Hauptflächen (31, 32) der ersten Bodenplatte (30) abgewinkelten ersten Stufenabschnitt (34) mit einer Höhe H und einen im Wesentlichen parallel zu den Hauptflächen (31, 32) der ersten Bodenplatte (30) verlaufenden, vom ersten Stufenabschnitt (34) abgewinkelten zweiten Stufenabschnitt (35) aufweist, wobei der zweite Stufenabschnitt (35) mit dem mindestens einen ersten Schwingungsdämpfer (11) verbunden ist.

10. Maschinenanordnung zum Verbinden einer Maschine mit einem Fundament, umfassend eine Maschine und eine Schwingplattenanordnung (10), wobei die Maschine mit der Schwingplattenanordnung (10) verbunden ist, und wobei die Schwingplattenanordnung (10) mit dem Fundament verbindbar ist, **dadurch gekennzeichnet, dass** die Schwingplattenanordnung (10) nach einem der Ansprüche 1 bis 9 ausgebildet ist.

11. Kompressoranordnung (100) zum Verbinden eines Kompressors (200), insbesondere eines Kompressors (200) zum Antreiben einer Wärmepumpe oder eines Kälteaggregats, mit einem Kompressorgehäuse, umfassend einen Kompressor (200), eine Schwingplattenanordnung (10) und ein Kompressorgehäuse, wobei der Kompressor (200) mit der Schwingplattenanordnung (10) verbunden ist, und wobei die Schwingplattenanordnung (10) mit dem Kompressorgehäuse verbunden ist, **dadurch gekennzeichnet, dass** die Schwingplattenanordnung (10) nach einem der Ansprüche 1 bis 9 ausgebildet ist.

## Claims

1. Oscillating plate assembly (10) for connecting a machine to a foundation, comprising at least one first vibration damper (11), a base plate assembly (20), and at least one second vibration damper (12); wherein the base plate assembly (20), while disposing the at least one first vibration damper (11) in between, is connectable to the foundation; and
wherein the base plate assembly (20), while disposing the at least one second vibration damper (12) in between, is connectable to the machine; wherein the base plate assembly (20) comprises a first base plate (30), at least one vibration-damping and/or insulating intermediate plate (40), and at least one further base plate (50);
wherein the first base plate (30), the at least one intermediate plate (40), and/or the at least one further base plate (50), have in each case a substantially plate-type shape having in each case two substantially parallel main faces, **characterized in that** the first base plate (30) is connected, in particular welded, to at least one spike (33), preferably three spikes (33), that stand(s) perpendicularly on a second main face (32) of the first base plate (30), and
**in that** the first base plate (30), while disposing the at least one intermediate plate (40), the at least one further base plate (50) and the at least one second vibration damper (12), preferably three second vibration dampers (12), in between, is connectable, in particular able to be screwed, to the machine by means of the spike (33).

2. Oscillating plate assembly (10) according to Claim 1, **characterized in that** the at least one intermediate plate (40) has elastic or viscoelastic properties, preferably comprises an elastic or viscoelastic material, in particular at least one material from the material group of bitumen, elastomers, silicones.

3. Oscillating plate assembly (10) according to Claim 1 or 2, **characterized in that** the first base plate (30), and/or the at least one further base plate (50), comprise(s) at least one metal, preferably is/are formed from a metal, in particular from iron or steel.

4. Oscillating plate assembly (10) according to one of the preceding claims, **characterized in that** the base plate assembly (20) is configured for damping torsional vibrations and transversal vibrations acting thereon.

5. Oscillating plate assembly (10) according to one of the preceding claims, **characterized in that** the intermediate plate (40) by way of the first main face (41) thereof is connected, in particular adhesively bonded, in a planar manner to the second main face (32) of the first base plate (30), and/or in that the intermediate plate (40) by way of the second main face (42) thereof is connected, in particular adhesively bonded, in a planar manner to a first main face (51) of the further base plate (50) .

6. Oscillating plate assembly (10) according to one of the preceding claims, **characterized in that** at least the main faces (41, 42) of the intermediate plate (40) and the main faces (51, 52) of the further base plate (50) have substantially identical dimensions.

7. Oscillating plate assembly (10) according to one of the preceding claims, **characterized in that** the main faces of the first base plate (30), of the at least one intermediate plate (40), and/or of the at least one further base plate (50), are disposed so as to be substantially parallel to a first connection plane (60) for connecting the oscillating plate assembly (10) to the foundation, and/or parallel to a second connection plane (70) for connecting the oscillating plate assembly (10) to the machine, wherein the connection planes (60, 70) are formed by the at least one first vibration damper (11) and/or by the at least one second vibration damper (12) .

8. Oscillating plate assembly (10) according to one of the preceding claims, **characterized in that** the first base plate (30) is connected to four first vibration dampers (11) that are disposed in the peripheral region of the first main face (31) of the first base plate (30).

9. Oscillating plate assembly (10) according to one of the preceding claims, **characterized in that** the first base plate (30) in the region of two mutually facing edges is configured in a step-like manner, and in each region has a first step portion (34) which is angled so as to be substantially perpendicular to the main faces (31, 32) of the first base plate (30) and has a height H and a second step portion (35) that runs so as to be substantially parallel to the main faces (31, 32) of the first base plate (30) and is angled from the first step portion (34), wherein the second step portion (35) is connected to the at least one first vibration damper (11).

10. Machine assembly for connecting a machine to a foundation, comprising a machine and an oscillating plate assembly (10), wherein the machine is connected to the oscillating plate assembly (10), and wherein the oscillating plate assembly (10) is connectable to the foundation, **characterized in that** the oscillating plate assembly (10) is configured according to one of Claims 1 to 9.

11. Compressor assembly (100) for connecting a compressor (200), in particular a compressor (200) for driving a heat pump or a refrigeration apparatus, to a compressor housing, comprising a compressor (200), an oscillating plate assembly (10) and a compressor housing, wherein the compressor (200) is connected to the oscillating plate assembly (10), and wherein the oscillating plate assembly (10) is connected to the compressor housing, **characterized in that** the oscillating plate assembly (10) is configured according to one of Claims 1 to 9.

## Revendications

1. Ensemble de plaques oscillantes (10) permettant de raccorder une machine à une fondation, comprenant au moins un premier amortisseur de vibrations (11), un ensemble de plaques de base (20) et au moins un deuxième amortisseur de vibrations (12),
l'ensemble de plaques de base (20) pouvant être raccordé à la fondation avec interposition de l'au moins un premier amortisseur de vibrations (11), et
l'ensemble de plaques de base (20) pouvant être raccordé à la machine avec interposition de l'au moins un deuxième amortisseur de vibrations (12),
l'ensemble de plaques de base (20) comprenant une première plaque de base (30), au moins une plaque intermédiaire (40) amortissant et/ou isolant des vibrations et au moins une autre plaque de base (50),
la première plaque de base (30), l'au moins une plaque intermédiaire (40) et/ou l'au moins une autre plaque de base (50) présentant respectivement une forme sensiblement de type plaque dotée respectivement de deux faces principales sensiblement parallèles,
**caractérisé en ce que** la première plaque de base (30) est raccordée, en particulier soudée à au moins un, de préférence trois boulons (33) perpendiculaires à une deuxième face principale (32) de la première plaque de base (30), et
**en ce que** la première plaque de base (30) peut être raccordée à la machine, en particulier peut être vissée sur celle-ci au moyen du boulon (33), avec interposition de l'au moins une plaque intermédiaire (40), de l'au moins une autre plaque de base (50) et de l'au moins un, de préférence de trois deuxièmes amortisseurs de vibrations (12).

2. Ensemble de plaques oscillantes (10) selon la revendication 1,
**caractérisé en ce que** l'au moins une plaque intermédiaire (40) présente des propriétés élastiques ou viscoélastiques, de préférence comprend une matière élastique ou viscoélastique, en particulier au moins une substance parmi les groupes de substances que sont les bitumes, les élastomères, les silicones.

3. Ensemble de plaques oscillantes (10) selon la revendication 1 ou 2,
**caractérisé en ce que** la première plaque de base (30) et/ou l'au moins une autre plaque de base (50) comprennent au moins un métal, de préférences sont formées à partir d'un métal, en particulier à partir de fer ou d'acier.

4. Ensemble de plaques oscillantes (10) selon l'une des revendications précédentes, **caractérisé en ce que** l'ensemble de plaques de base (20) est réalisé pour amortir des vibrations de torsion et des vibrations transversales agissant sur celui-ci.

5. Ensemble de plaques oscillantes (10) selon l'une des revendications précédentes, **caractérisé en ce que** la plaque intermédiaire (40) est raccordée de manière plane, en particulier collée par sa première face principale (41) à la deuxième face principale (32) de la première plaque de base (30), et/ou
**en ce que** la plaque intermédiaire (40) est raccordée de manière plane, en particulier collée par sa deuxième face principale (42) à une première face principale (51) de l'autre plaque de base (50).

6. Ensemble de plaques oscillantes (10) selon l'une des revendications précédentes, **caractérisé en ce qu'**au moins les faces principales (41, 42) de la plaque intermédiaire (40) et les faces principales (51, 52) de l'autre plaque de base (50) présentent sensiblement les mêmes dimensions.

7. Ensemble de plaques oscillantes (10) selon l'une des revendications précédentes, **caractérisé en ce que** les faces principales de la première plaque de base (30), de l'au moins une plaque intermédiaire (40) et/ou de l'au moins une autre plaque de base (50) sont disposées sensiblement parallèlement à un premier plan de connexion (60) pour le raccordement de l'ensemble de plaques oscillantes (10) à la fondation et/ou parallèlement à un deuxième plan de connexion (70) pour le raccordement de l'ensemble de plaques oscillantes (10) à la machine, les plans de connexion (60, 70) étant formés par l'au moins un premier amortisseur de vibrations (11) et/ou par l'au moins un deuxième amortisseur de vibrations (12).

8. Ensemble de plaques oscillantes (10) selon l'une des revendications précédentes, **caractérisé en ce que** la première plaque de base (30) est raccordée à quatre premiers amortisseurs de vibrations (11) disposés dans la région de bord de la première face principale (31) de la première plaque de base (30).

9. Ensemble de plaques oscillantes (10) selon l'une des revendications précédentes, **caractérisé en ce que** la première plaque de base (30) est réalisée de manière étagée dans la région de deux arêtes opposées l'une à l'autre et présente, dans chaque région, une première partie étagée (34) coudée sensiblement perpendiculairement aux faces principales (31, 32) de la première plaque de base (30) et dotée d'une hauteur H, et une deuxième partie étagée (35) s'étendant sensiblement parallèlement aux faces principales (31, 32) de la première plaque de base (30), coudée à partir de la première partie étagée (34), la deuxième partie étagée (35) étant raccordée à l'au moins un premier amortisseur de vibrations (11).

10. Ensemble de machine permettant de raccorder une machine à une fondation, comprenant une machine et un ensemble de plaques oscillantes (10), la machine étant raccordée à l'ensemble de plaques oscillantes (10), et l'ensemble de plaques oscillantes (10) pouvant être raccordé à la fondation, **caractérisé en ce que** l'ensemble de plaques oscillantes (10) est réalisé selon l'une des revendications 1 à 9.

11. Ensemble de compresseur (100) permettant de raccorder un compresseur (200), en particulier un compresseur (200) permettant d'entraîner une pompe à chaleur ou un groupe frigorifique, comportant un carter de compresseur, comprenant un compresseur (200), un ensemble de plaques oscillantes (10) et un carter de compresseur, le compresseur (200) étant raccordé à l'ensemble de plaques oscillantes (10), et l'ensemble de plaques oscillantes (10) étant raccordé au carter de compresseur, **caractérisé en ce que** l'ensemble de plaques oscillantes (10) est réalisé selon l'une des revendications 1 à 9.
